# EUROPEAN PATENT APPLICATION

(11) **EP 4 641 151 A1**
(43) Date of publication of application: **29.10.2025**
(21) Application number: 23906708.5
(22) Date of filing: 05.12.2023
(51) Int. Cl.: G01J 5/48, H04N 23/695

(54) **CONTROL SYSTEM, CONTROL METHOD, AND PROGRAM**

(30) Priority: 20.12.2022 JP 2022203563
(71) Applicant: Panasonic Intellectual Property Management Co., Ltd., Kadoma-shi, Osaka 571-0057 (JP)
(72) Inventor: URA, Kazuto, Kadoma-shi, Osaka 571-0057 (JP); KOGA, Tatsuo, Kadoma-shi, Osaka 571-0057 (JP)
(74) Representative: Appelt, Christian W.
(86) International application number: PCT/JP2023/043434
(87) International publication number: WO 2024/135342

(57) **Abstract**

The problem is to contribute to detecting a mover such as a person more accurately. A control system (1) includes a determiner (231) and a shooting controller (232). The determiner (231) determines, based on a thermal image generated by an infrared camera (3) installed in a facility (10), a location of a first area where a plurality of movers are densely concentrated. The shooting controller (232) controls an operation of the infrared camera (3). The shooting controller (232) controls the infrared camera (3) to make the infrared camera (3) shoot the first area preferentially over a second area. The second area is other than the first area.

## Description

### Technical Field

The present disclosure generally relates to a control system, a control method, and a program, and more particularly relates to a control system, a control method, and a program, all of which are applicable to thermal images.

### Background Art

Patent Literature 1 discloses air conditioning equipment. The air conditioning equipment includes a sensor such as a thermal image sensor having the ability to measure a temperature distribution two-dimensionally. The air conditioning equipment learns the specifics of control such as the direction to which air needs to be directed by extracting feature quantities, such as the presence or absence of any person in/from a room or the location of the person, which have been acquired by the sensor.

### Citation List

### Patent Literature

Patent Literature 1: JP 2015-178953 A

### Summary of Invention

Recently, there has been an increasing demand for a sensor such as an infrared camera having the ability to more accurately detect a mover, such as a person, as the target of detection.

In view of the foregoing background, it is therefore an object of the present disclosure to provide a control system, a control method, and a program, all of which contribute to detecting a mover such as a person more accurately.

A control system according to an aspect of the present disclosure includes a determiner and a shooting controller. The determiner determines, based on a thermal image generated by an infrared camera installed in a facility, a location of a first area where a plurality of movers are densely concentrated. The shooting controller controls an operation of the infrared camera. The shooting controller controls the infrared camera to make the infrared camera shoot the first area preferentially over a second area. The second area is other than the first area.

A control method according to another aspect of the present disclosure is designed to be performed by a computer system. The control method includes a determination step and a control step. The determination step includes determining, based on a thermal image generated by an infrared camera installed in a facility, a location of a first area where a plurality of movers are densely concentrated. The control step includes controlling an operation of the infrared camera. The control step includes controlling the infrared camera to make the infrared camera shoot the first area preferentially over a second area. The second area is other than the first area.

A program according to still another aspect of the present disclosure is designed to cause the computer system to perform the control method described above.

### Brief Description of Drawings

[FIG. 1] FIG. 1 is a block diagram illustrating a configuration for a control system according to a first embodiment;
[FIG. 2] FIG. 2 is a schematic representation illustrating an exemplary space where the control system may be used;
[FIG. 3] FIG. 3 is a schematic representation illustrating an exemplary arrangement of infrared cameras of the control system;
[FIG. 4] FIG. 4 is a schematic representation illustrating another exemplary arrangement of infrared cameras of the control system;
[FIG. 5] FIG. 5 is a schematic representation illustrating an exemplary set of shooting ranges of the infrared cameras;
[FIG. 6] FIG. 6 is a schematic representation illustrating another exemplary set of shooting ranges of the infrared cameras;
[FIG. 7] FIG. 7 is a schematic representation illustrating still another exemplary shooting range of one of the infrared cameras;
[FIG. 8] FIG. 8 is a schematic representation illustrating yet another exemplary shooting range of one of the infrared cameras;
[FIG. 9] FIG. 9 is a flowchart showing the procedure of operation of the control system;
[FIG. 10] FIG. 10 is a block diagram illustrating a configuration for a control system according to a second embodiment; and
[FIG. 11] FIG. 11 is a flowchart showing the procedure of operation of the control system.

### Description of Embodiments

A preferred embodiment of the present disclosure will now be described in detail with reference to the accompanying drawings. In the following description of embodiments, constituent elements illustrated on multiple drawings and having the same feature will be designated by the same reference sign and description thereof will be omitted herein to avoid redundancy. Note that the embodiment to be described below is only an exemplary one of various embodiments of the present disclosure and should not be construed as limiting. Rather, the exemplary embodiment may be readily modified in various manners depending on a design choice or any other factor without departing from the scope of the present disclosure. It should also be noted that the embodiments (including their variations) to be described below may be adopted in combination as appropriate.

The drawings to be referred to in the following description of embodiments are all schematic representations. Thus, the ratio of the dimensions (including thicknesses) of respective constituent elements illustrated on the drawings does not always reflect their actual dimensional ratio.

### (First embodiment)

### (1) Overview

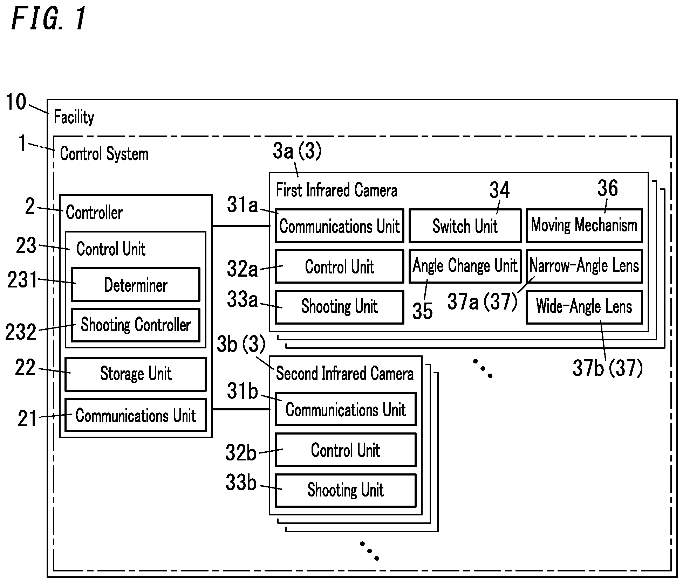

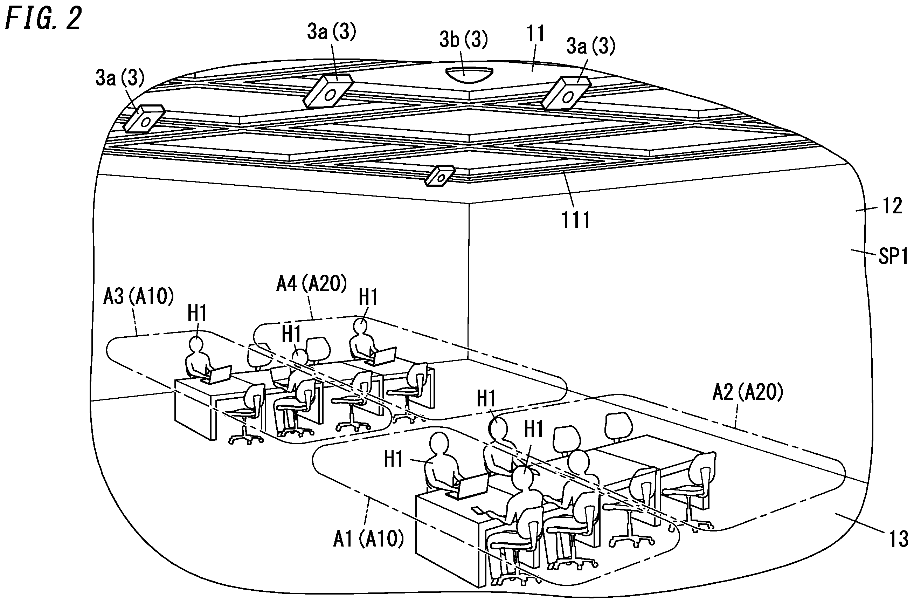

First, an overview of a control system 1 according to a first embodiment will be described with reference to FIGS. 1 and 2.

As shown in FIG. 1, the control system 1 is provided for a facility 10. As used herein, examples of the "facility" include dwelling facilities for use for housing purposes and non-dwelling facilities such as stores (tenants' stores), offices (office buildings), welfare facilities, educational institutions, hospitals, and factories. Examples of the non-dwelling facilities further include restaurants, amusement centers, hotels, inns, kindergartens, daycare facilities, and community centers. That is to say, the facility 10 may be a dwelling facility such as a multi-family dwelling house (i.e., a so-called "mansion" in Japan) or a non-dwelling facility such as an office, whichever is appropriate. Alternatively, the facility 10 may also be a combination of a dwelling facility and a non-dwelling facility. For example, the facility 10 may include stores on lower floors thereof and dwelling units on upper floors thereof. In the first embodiment, the facility 10 is supposed to be an office.

The control system 1 includes a determiner 231 and a shooting controller 232.

The determiner 231 determines, based on a thermal image generated by an infrared camera 3 installed in a facility 10, the location of a first area A10 (refer to FIG. 2) where a plurality of persons H1 (refer to FIG. 2) are densely concentrated. As used herein, the expression "a plurality of movers are densely concentrated" refers to not only a situation where a plurality of movers are present in a certain area but also a situation where only one mover is present in a certain area.

The shooting controller 232 controls the operation of the infrared camera 3. The shooting controller 232 controls the infrared camera 3 to make the infrared camera 3 shoot the first area A10 preferentially over a second area A20 (refer to FIG. 2). The second area A20 is other than the first area A10.

Making the infrared camera 3 preferentially shoot the first area A10 where a plurality of movers, such as persons H1 as the targets to be detected by the infrared camera 3, are densely concentrated contributes to detecting the movers such as persons H1 more accurately.

### (2) Details

A specific configuration for the control system 1 according to the first embodiment will now be described with reference to FIGS. 1-8. Note that in the following description, a situation where the movers to be detected by the infrared camera 3 include at least persons H1 will be described as an example.

### (2.1) Configuration for control system

As described above, the control system 1 according to the first embodiment is introduced into the facility 10 such as an office. As shown in FIG. 1, the control system 1 includes a controller 2 and a plurality of infrared cameras 3. The plurality of infrared cameras 3 includes a plurality of first infrared cameras 3a and a plurality of second infrared cameras 3b. In the following description, if there is no need to distinguish the first infrared cameras 3a and the second infrared cameras 3b from each other, then the first infrared cameras 3a and the second infrared cameras 3b will be hereinafter simply referred to as "infrared cameras 3" collectively.

### (2.2) Infrared camera

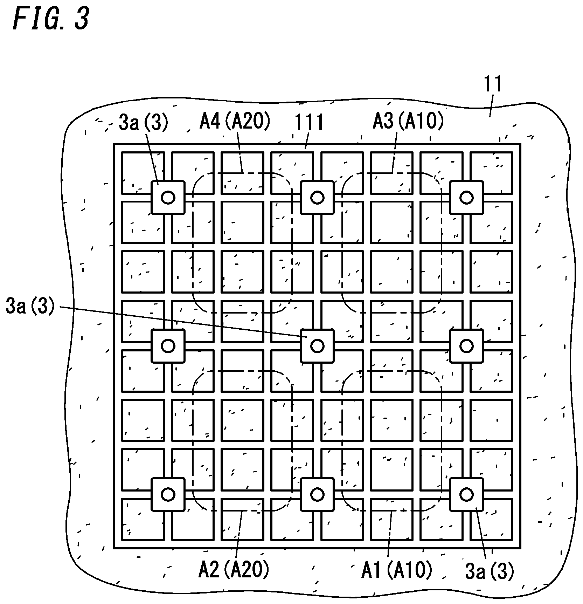

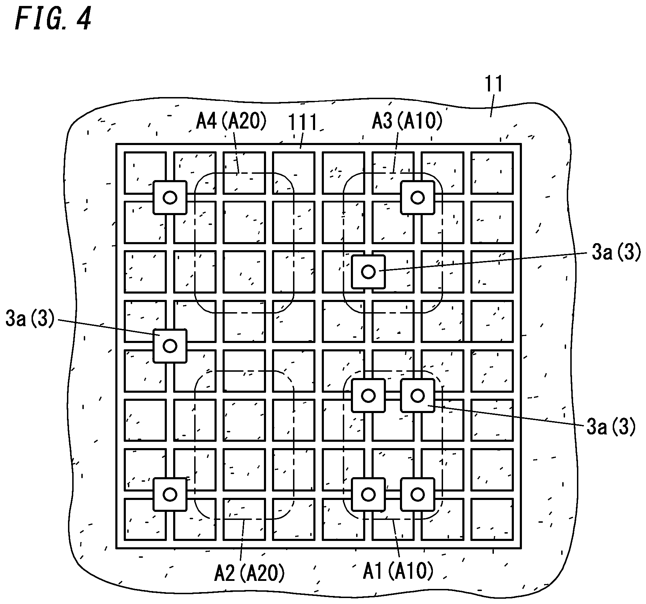

As shown in FIG. 2, the infrared cameras 3 according to the first embodiment are installed either directly or indirectly on a building component such as the ceiling surface 11 of the facility 10. As for the first embodiment, a plurality of (e.g., nine in the example illustrated in FIGS. 3 and 4) first infrared cameras 3a and one second infrared camera 3b which are installed on the ceiling surface 11 of a space Sp1 (e.g., a room) inside the facility 10 will be described.

Each of the first infrared cameras 3a is configured to be movable, for example, to detect (shoot) the persons H1 present in the facility 10 as will be described later. The second infrared camera 3b is configured to be able to shoot the space Sp1 almost entirely.

### (2.2.1) Second infrared camera

First, a configuration for the second infrared camera 3b will be described.

The second infrared camera 3b is installed on a central part of the ceiling surface 11 in the space Sp1 of the facility 10.

As shown in FIG. 1, the second infrared camera 3b includes a communications unit 31b, a control unit 32b, and a shooting unit 33b.

The communications unit 3 1b includes a communications interface configured to be ready to communicate with a communications unit 21 of the controller 2 (to be described later). As used herein, the phrase "to be ready to communicate" means being able to transmit and receive signals either directly or indirectly via a network or a repeater, for example, by an appropriate wired or wireless communication method.

The communications unit 31b transmits a thermal image, generated by the shooting unit 33b, to the controller 2.

The control unit 32b controls the shooting unit 33b. The control unit 32b according to the first embodiment controls the shooting unit 33b under the control of the shooting controller 232 of the controller 2.

The shooting unit 33b detects an infrared ray to generate a two-dimensional thermal image. The shooting unit 33b includes a thermal image sensor. As used herein, the "thermal image" refers to thermal image data and may encompass thermal images in the forms of a still picture (frame), a moving picture, and a stop-motion picture. In the first embodiment, the thermal image acquired by the shooting unit 33b is supposed to be a moving picture including a plurality of frames.

The thermal image generated by the shooting unit 33b changes the display colors of pixels depending on the surface temperature of the target object. In the thermal image generated by the shooting unit 33b, the higher the surface temperature of a part of the object represented by a pixel is, the closer to the color white the display color of the pixel may be, for example. On the other hand, the lower the surface temperature of a part of the object represented by a pixel is, the closer to the color black the display color of the pixel may be, for example.

In addition, the second infrared camera 3b includes a lens that allows a relatively broad range to be shot such as a fish-eye lens or a fly-eye lens made up of a plurality of lenses with mutually different optical axis directions. The second infrared camera 3b according to the first embodiment includes a fish-eye lens and is configured to be able to shoot a floor 13 (refer to FIG. 2) in the space Sp1 of the facility 10 almost entirely.

### (2.2.2) First infrared camera

Next, a configuration for the first infrared cameras 3a will be described.

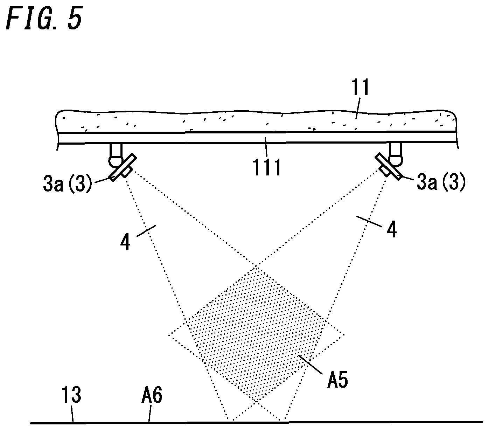

As shown in FIG. 2, the plurality of first infrared cameras 3a are mounted on rails 111 installed on the ceiling surface 11 in the space Sp1 of the facility 10. The rails 111 are arranged in a grid pattern to cover the ceiling surface 11 almost entirely. In a default state, the plurality of first infrared cameras 3a according to the first embodiment are distributed to be spaced from each other at almost uniform intervals as shown in FIG. 3, for example. In addition, each of the plurality of first infrared cameras 3a according to the first embodiment is arranged such that the shooting range 4 (refer to FIG. 5) of the first infrared camera 3a falls within the shooting range 4 of the second infrared camera 3b. That is to say, the shooting range 4 of each of the first infrared cameras 3a forms part of the shooting range 4 of the second infrared camera 3b.

As shown in FIG. 1, the first infrared cameras 3a each include a communications unit 31a, a control unit 32a, a shooting unit 33a, a switch unit 34, an angle change unit 35, a moving mechanism 36, and a plurality of lenses 37.

The communications unit 31a includes a communications interface configured to be ready to communicate with the communications unit 21 of the controller 2.

The communications unit 31a transmits a thermal image, generated by the shooting unit 33a, to the controller 2.

The control unit 32a controls the shooting unit 33a, the switch unit 34, the angle change unit 35, and the moving mechanism 36. The control unit 32a according to the first embodiment controls the shooting unit 33a, the switch unit 34, the angle change unit 35, and the moving mechanism 36 under the control of the shooting controller 232 of the controller 2.

The shooting unit 33a detects an infrared ray to generate a two-dimensional thermal image. The shooting unit 33a includes a thermal image sensor. In the first embodiment, the thermal image acquired by the shooting unit 33a is supposed to be a moving picture including a plurality of frames.

The thermal image generated by the shooting unit 33a changes the display colors of pixels depending on the surface temperature of the target object. In the thermal image generated by the shooting unit 33a, the higher the surface temperature of a part of the object represented by a pixel is, the closer to the color white the display color of the pixel may be, for example. On the other hand, the lower the surface temperature of a part of the object represented by a pixel is, the closer to the color black the display color of the pixel may be, for example.

The plurality of lenses 37 includes a narrow-angle lens 37a and a wide-angle lens 37b. That is to say, the plurality of lenses 37 includes multiple types of lenses. Note that in the following description, if there is no need to distinguish the narrow-angle lens 37a and the wide-angle lens 37b from each other, the narrow-angle lens 37a and the wide-angle lens 37b will be hereinafter simply referred to as "lenses 37" collectively.

The narrow-angle lens 37a has a narrower shooting range 4 and a longer shooting distance than the wide-angle lens 37b. The wide-angle lens 37b has a broader shooting range 4 and a shorter shooting distance than the narrow-angle lens 37a. Optionally, the plurality of lenses 37 may include not only the narrow-angle lens 37a and the wide-angle lens 37b but also another type of lens 37 as well.

Note that the shooting range 4 of each of the first infrared cameras 3a according to the first embodiment is narrower than the shooting range 4 of the second infrared camera 3b even when the first infrared camera 3a uses the wide-angle lens 37b (i.e., even when the wide-angle lens 37b is fitted to the first infrared camera 3a).

The switch unit 34 is configured to be ready to switch the multiple types of the lenses 37. That is to say, the switch unit 34 according to the first embodiment switches at least the narrow-angle lens 37a and the wide-angle lens 37b. In addition, the switch unit 34 switches the multiple types of lenses 37 under the control of the shooting controller 232 of the controller 2.

The angle change unit 35 is configured to be ready to change the shooting angle of the first infrared camera 3a. More specifically, the angle change unit 35 is configured to be able to turn (or rotate) the first infrared camera 3a in at least one of the horizontal direction (i.e., panning direction) or the vertical direction (i.e., tilt direction). The angle change unit 35 according to the first embodiment is configured to be able to turn (or rotate) the first infrared camera 3a in both the horizontal direction (i.e., panning direction) and the vertical direction (i.e., tilt direction). In addition, the angle change unit 35 changes the shooting angle under the control of the shooting controller 232 of the controller 2.

The moving mechanism 36 is configured to allow the first infrared camera 3a to move along the rails 111. The moving mechanism 36 according to the first embodiment may include, for example, a motor and a wheel to be driven by the motor to change its traveling direction. That is to say, the moving mechanism 36 according to the first embodiment is configured to allow the first infrared camera 3a to travel along the rails 111. The moving mechanism 36 moves along the rails 111 under the control of the shooting controller 232 of the controller 2.

### (2.3) Controller

The controller 2 includes, as a principal constituent element, a computer system including one or more processors and one or more memories. The functions of the respective components of the controller 2 are performed by making the one or more processors execute a program stored in the memory. The program may be stored in advance in the memory. Alternatively, the program may also be downloaded via a telecommunications line such as the Internet or distributed after having been stored in a non-transitory storage medium such as a memory card.

The controller 2 may be provided in, for example, a caretaker's room in an office building. The controller 2 may be implemented as, for example, a server device. As shown in FIG. 1, the controller 2 includes a communications unit 21, a storage unit 22, and a control unit 23.

The communications unit 21 includes a communications interface configured to be ready to communicate with the communications unit 31a of each of the first infrared cameras 3a and the communications unit 31b of the second infrared camera 3b. The communications unit 21 receives thermal images from the plurality of infrared cameras 3.

The storage unit 22 may be a semiconductor memory such as a read-only memory (ROM), a random-access memory (RAM), or an electrically erasable programmable read-only memory (EEPROM). Note that the storage unit 22 does not have to be a semiconductor memory but may also be a hard disk drive, for example.

The storage unit 22 according to the first embodiment stores map information, priority information, and determination information.

The map information includes information about the layout of the room (space Sp1) in the facility 10, information about the height of the ceiling surface 11, information about the arrangement of walls 12, and information about the arrangement of the rails 111. The map information further includes information about the infrared cameras 3 arranged in each space Sp1. The map information may be, for example, three-dimensional model data such as building information modeling (BIM) data about the facility 10.

The priority information is a piece of information indicating the correspondence between the types of movers and their priority levels in shooting. The priority information according to the first embodiment indicates that persons H1 have the highest priority level. That is to say, the control system 1 according to the first embodiment gives the persons H1 the highest priority as the targets to be shot (or detected) by the infrared cameras 3.

The determination information is a piece of information indicating the correspondence between the types of movers and the temperatures, dimensions, and other parameters of the movers. For example, the determination information indicates the correspondence between "person" as the type of the movers and an ordinary body temperature (surface temperature) of the person H1, the two-dimensional area of the person H1, and other parameters.

The control unit 23 includes the determiner 231 and the shooting controller 232.

As described above, the determiner 231 determines, based on a thermal image generated by an infrared camera 3, the location of a first area A10 where a plurality of persons H1 are densely concentrated. The determiner 231 performs object (mover) detection processing such as difference detection processing on the thermal image thus acquired. Examples of the difference detection processing include the processing of detecting a mover (object) using a background difference and the processing of detecting a mover by deriving the magnitude of motion of the mover using an interframe difference.

For example, if the determiner 231 has detected at least a predetermined number of persons H1 (movers) in an area falling within a predetermined range, then the determiner 231 determines that area to be the first area A10.

In addition, the determiner 231 according to the first embodiment also determines the type of the mover detected. For example, the determiner 231 determines the type of the mover based on the number of pixels included in an image representing the object detected (i.e., the size of the object detected on the image), the temperatures at the pixels, and the determination information.

Optionally, the determiner 231 may detect the object (mover) and determine the type of the mover by using a learned model generated by machine learning. The learned model has been generated by, for example, supervised learning using multiple sets of supervised data. The multiple sets of supervised data may be, for example, a plurality of thermal images generated by shooting a situation where at least one person H1 is present within the shooting range 4. The determiner 231 may acquire, by entering the thermal image generated by the infrared camera 3 as input data into the learned model, information indicating, as the output of the learned model, whether there is any person H1 within the shooting range 4 (i.e., within the thermal image). Note that the algorithm of the machine learning may be, for example, a neural network.

Then, the determiner 231 according to the first embodiment determines, by reference to the priority information and the thermal image, the location of the first area A10 where movers of the type having the highest priority level are densely concentrated. In the first embodiment, the movers with the highest priority level are "persons" as described above. Thus, the control system 1 according to this embodiment may determine the location of the first area A10 where persons H1 (movers) to be shot (or detected) preferentially are densely concentrated.

In addition, the determiner 231 according to the first embodiment also determines the location of the first area A10 based on the thermal image generated by the second infrared camera 3b. Determining the location of the first area A10 based on the thermal image generated by the second infrared camera 3b having a broader shooting range 4 than the first infrared cameras 3a allows the location of the first area A10 to be determined more accurately.

Furthermore, the determiner 231 according to the first embodiment predicts the destination of a mover such as a person H1 based on a time-dependent variation of the thermal image. The determiner 231 predicts the destination of the mover such as a person H1 by, for example, the moving direction and motion velocity of an image representing the person H1 that has been detected from the thermal image. Then, the determiner 231 determines the location of the first area A10 based on the thermal image and the predicted destination of the mover. Predicting the destination of the mover such as the person H1 allows the location of the first area A10 to be determined more accurately.

Furthermore, the determiner 231 according to the first embodiment determines the respective shooting ranges 4 of the plurality of the first infrared cameras 3a based on respective lens 37 types, positions, and shooting angles of the plurality of first infrared cameras 3a. Besides, the determiner 231 also determines the location of at least one of an overlapping region A5 (refer to FIG. 5) where at least two of the plurality of shooting ranges 4, of which the locations have been determined, overlap with each other or a blank region A6 (refer to FIG. 5) belonging to none of the plurality of shooting ranges 4.

As described above, the shooting controller 232 controls the infrared cameras 3 to shoot the first area A10 preferentially over the second area A20 that is other than the first area A10, of which the location has been determined by the determiner 231.

The shooting controller 232 according to the first embodiment controls at least one infrared camera 3 belonging to the plurality of infrared cameras 3 to make the at least one infrared camera 3 shoot the first area A10 preferentially. More specifically, the shooting controller 232 controls at least one first infrared camera 3a belonging to the plurality of first infrared cameras 3a to make the at least one first infrared camera 3a shoot the first area A10 preferentially.

FIG. 3 is a schematic representation illustrating an exemplary arrangement of the plurality of first infrared cameras 3a. The positions of the plurality of first infrared cameras 3a shown in FIG. 3 are default positions. In a situation where no persons H1 (movers) are present in the space Sp1, for example, the respective positions of the plurality of first infrared cameras 3a are default positions. The plurality of first infrared cameras 3a at those default positions are spaced from each other at almost equal intervals.

Suppose a transition has been made from the state where no persons H1 are present in the space Sp1 to a state where a plurality of persons H1 are present in the space Sp1 as shown in FIG. 2. In that case, the determiner 231 determines areas A1 and A3 to be the first areas A10. Note that the other areas such as areas A2 and A4 are second areas A20.

Now that the determiner 231 has determined the areas A1 and A3 to be the first areas A10, the shooting controller 232 controls the first infrared cameras 3a to make the first infrared cameras 3a shoot the areas A1 and A3 preferentially.

Note that not only when the persons H1 are actually present as shown in FIG. 2 but also when the determiner 231 has determined the areas A1 and A3 to be the first areas A10 based on the predicted destination of the persons H1 and the thermal image, the shooting controller 232 also controls the first infrared cameras 3a to make the first infrared cameras 3a shoot the areas A1 and A3 preferentially.

For example, the shooting controller 232 may change the arrangement of the plurality of first infrared cameras 3a into the arrangement shown in FIG. 4 by shifting the first infrared cameras 3a. In the example shown in FIG. 4, four first infrared cameras 3a are arranged at respective positions corresponding to the area A1 and two first infrared cameras 3a are arranged at respective positions corresponding to the area A3. The first area A10 may be shot more accurately by causing the shooting controller 232 to shift the first infrared cameras 3a to shoot the first area A10 preferentially.

Alternatively, the shooting controller 232 may have the first area A10 shot preferentially by changing the shooting angle of the first infrared cameras 3a. The first area A10 may be shot more accurately by causing the shooting controller 232 to change the shooting angle of the first infrared cameras 3a.

Optionally, the shooting controller 232 may also have the first area A10 shot preferentially by changing the type of the plurality of lenses 37 of the first infrared cameras 3a. For example, the shooting controller 232 may have the first area A10 shot preferentially by changing the type of the plurality of lenses 37 of the first infrared cameras 3a from the wide-angle lenses 37b into the narrow-angle lenses 37a. The first area A10 may be shot more accurately by causing the shooting controller 232 to change the type of the plurality of lenses 37 of the first infrared cameras 3a.

In addition, the shooting controller 232 controls at least one first infrared camera 3a belonging to the plurality of first infrared cameras 3a to cut down at least one of the overlapping region A5 or the blank region A6. More specifically, the shooting controller 232 controls at least one first infrared camera 3a belonging to the plurality of first infrared cameras 3a by changing at least one of the lens 37 type, the position, or the shooting angle of the at least one first infrared camera 3a to cut down at least one of the overlapping region A5 or the blank region A6.

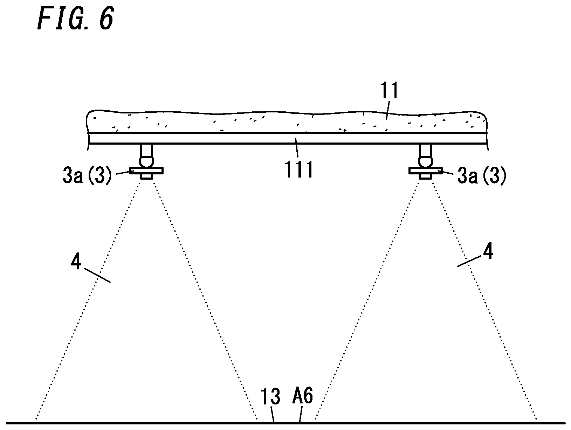

In the example shown in FIG. 5, the overlapping region A5 is formed by allowing the two shooting ranges 4 of two first infrared cameras 3a to overlap with each other. The shooting controller 232 may cut down the overlapping region A5 and the blank region A6 by, for example, changing the shooting angles of the two first infrared cameras 3a as shown in FIG. 6.

Furthermore, the shooting controller 232 determines, based on the shooting range 4, of which the location has been determined by the determiner 231, and the map information, whether any region with a low priority level in shooting such as walls 12 falls within the shooting range 4.

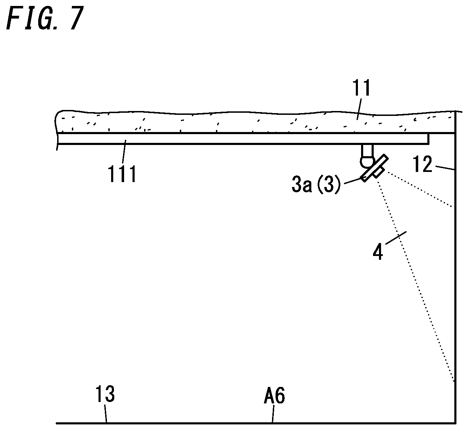

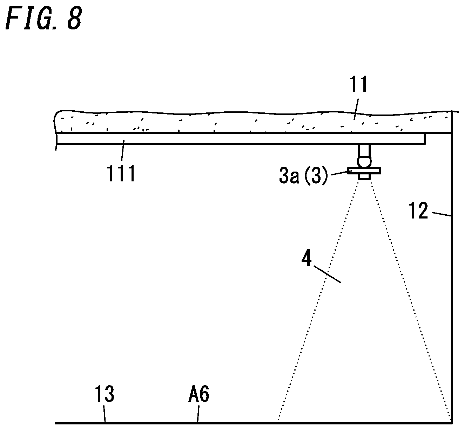

In the example shown in FIG. 7, a wall 12 falls within the shooting range 4 of the first infrared camera 3a. The shooting controller 232 determines, based on the shooting range 4, of which the location has been determined by the determiner 231 and the map information, that the wall 12 fall within the shooting range 4. On determining that the wall 12 fall within the shooting range 4, the shooting controller 232 cuts down the region with the low priority level in shooting and the blank region A6 by changing the shooting angle of the first infrared camera 3a as shown in FIG. 8, for example.

Making the shooting controller 232 control the infrared cameras 3 to cut down at least one of the overlapping region A5 or the blank region A6 allows the space Sp1 to be shot more comprehensively (exhaustively).

### (3) Operation of control system

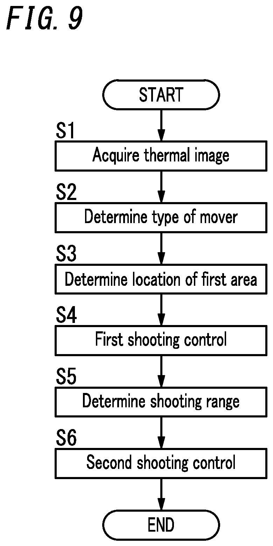

Next, it will be described with reference to FIG. 9 how the control system 1 according to the first embodiment operates.

The controller 2 acquires a thermal image by receiving the thermal image from an infrared camera 3 (in S1). Next, the controller 2 determines the type of a mover based on the thermal image and determination information (in S2). Then, the controller 2 determines the location of the first area A10 based on the thermal image and priority information (in S3).

Subsequently, the controller 2 performs a first shooting control (in S4). When performing the first shooting control, the controller 2 controls the infrared camera 3 to make the infrared camera 3 shoot the first area A10 preferentially.

Thereafter, the controller 2 determines the respective shooting ranges 4 of the plurality of first infrared cameras 3a based on the types of the lenses 37 of the plurality of first infrared cameras 3a and the positions and shooting angles of the first infrared cameras 3a, (in S5).

Next, the controller 2 performs second shooting control (in S6). When performing the second shooting control, the controller 2 controls the infrared cameras 3 to cut down at least one of the overlapping region A5 or the blank region A6.

Note that the flowchart shown in FIG. 9 shows only an exemplary procedure and should not be construed as limiting. Optionally, the processing steps shown in FIG. 9 may be performed in a different order from the illustrated one, some of the processing steps shown in FIG. 9 may be omitted as appropriate, and/or an additional processing step may be performed as needed.

### (4) Variations

Next, variations of the first embodiment will be enumerated one after another.

The functions of the control system 1 (controller 2) according to the first embodiment may also be implemented as a control method, a (computer) program, or a non-transitory storage medium on which the program is stored. A control method according to an aspect is performed by a computer system. The control method includes a determination step and a control step. The determination step includes determining, based on a thermal image generated by an infrared camera 3 installed in a facility 10, the location of a first area A10 where a plurality of movers are densely concentrated. The control step includes controlling the operation of the infrared camera 3. The control step includes controlling the infrared camera 3 to make the infrared camera 3 shoot the first area A10 preferentially over a second area A20. The second area A20 is other than the first area A10. A program according to another aspect is designed to cause one or more processors to perform the control method described above.

The control system 1 according to the present disclosure or the agent that performs the control method according to the present disclosure includes a computer system. The computer system may include a processor and a memory as principal hardware components thereof. The computer system performs the functions of the control system 1 according to the present disclosure or serves as the agent that performs the control method according to the present disclosure by making the processor execute a program stored in the memory of the computer system. The program may be stored in advance in the memory of the computer system. Alternatively, the program may also be downloaded through a telecommunications line or be distributed after having been recorded in some non-transitory storage medium such as a memory card, an optical disc, or a hard disk drive, any of which is readable for the computer system. The processor of the computer system may be made up of a single or a plurality of electronic circuits including a semiconductor integrated circuit (IC) or a large-scale integrated circuit (LSI). As used herein, the "integrated circuit" such as an IC or an LSI is called by a different name depending on the degree of integration thereof. Examples of the integrated circuits such as an IC or an LSI include integrated circuits called a "system LSI," a "very-large-scale integrated circuit (VLSI)," and an "ultra-large-scale integrated circuit (ULSI)." Optionally, a field-programmable gate array (FPGA) to be programmed after an LSI has been fabricated or a reconfigurable logic device allowing the connections or circuit sections inside of an LSI to be reconfigured may also be adopted as the processor. Those electronic circuits may be either integrated together on a single chip or distributed on multiple chips, whichever is appropriate. Those multiple chips may be aggregated together in a single device or distributed in multiple devices without limitation. As used herein, the "computer system" includes a microcontroller including one or more processors and one or more memories. Thus, the microcontroller may also be implemented as a single or a plurality of electronic circuits including a semiconductor integrated circuit or a large-scale integrated circuit.

In the embodiment described above, the plurality of functions of the control system 1 are integrated together in a single housing. However, this is not an essential configuration for the control system 1. Alternatively, those constituent elements of the control system 1 may be distributed in multiple different housings. Still alternatively, at least some functions of the control system 1 (e.g., some functions of the controller 2) may be implemented as a cloud computing system as well.

Conversely, at least some functions of the control system 1 which are distributed in multiple devices according to the first embodiment described above may be aggregated together within a single housing. For example, some functions of the control system 1 which are distributed in the controller 2 and the infrared camera 3 in the embodiment described above may be aggregated together within a single housing.

The control system 1 only needs to include at least the determiner 231 and the shooting controller 232. Although the control system 1 according to the first embodiment includes a plurality of infrared cameras 3 as an example, the control system 1 may include only one infrared camera 3.

In the first embodiment described above, the controller 2 is installed inside the facility 10 as an example. Alternatively, the controller 2 may also be installed outside the facility 10. That is to say, part of the control system 1 may be provided outside of the facility 10.

In the first embodiment described above, the algorithm of machine learning is supposed to be a neural network as an example. However, the machine learning algorithm does not have to be the neural network but may also be, for example, extreme gradient boosting (XGB) regression, random forest, decision tree, logistic regression, support vector machine (SVM), naive Bayes classifier, or k-nearest neighbors method. Alternatively, the machine learning algorithm may also be a Gaussian mixture model (GMM) or k-means clustering, for example.

Optionally, the learned model may be updated by performing additional learning.

In the first embodiment described above, the determiner 231 determines the location of the first area A10 based on a thermal image generated by the second infrared camera 3b. However, the second infrared camera 3b is not an essential constituent element for the control system 1. That is to say, the determiner 231 may also determine the location of the first area A10 based on a thermal image generated by at least one of the first infrared cameras 3a.

### (Second embodiment)

Next, a control system 1 according to a second embodiment will be described.

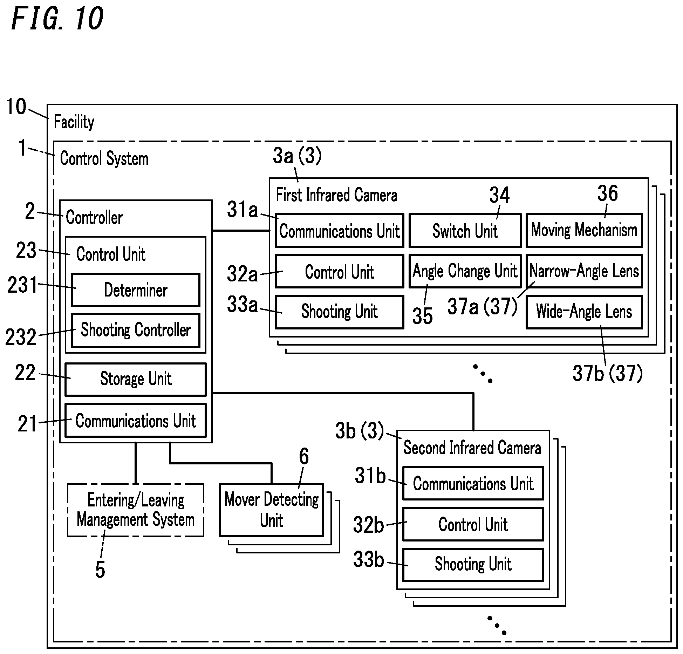

As shown in FIG. 10, the control system 1 according to the second embodiment further includes an entering/leaving management system 5 and a plurality of mover detecting units 6, which is a difference from the control system 1 according to the first embodiment described above.

The entering/leaving management system 5 is a system for managing entering and leaving into/from a room (space Sp1) in the facility 10. The entering/leaving management system 5 may, for example, make a person H1 hold an authentication card he or she carries with him or her over an authentication device installed beside, for example, the door of each room (space Sp1) to allow the door to be unlocked automatically if the authentication is a success.

The entering/leaving management system 5 allows the activity of the person H1 (i.e., when he or she stayed where) to be managed based on record of authentication. The entering/leaving management system 5 allows, for example, the number of persons H1 present in each space Sp1 to be managed. The entering/leaving management system 5 transmits entering/leaving information, including history of the person H1 (mover) entering and leaving the facility 10, to the controller 2. The entering/leaving management information includes, for example, a piece of information indicating the number of persons H1 present in each space Sp1.

Each of the mover detecting units 6 is a sensor installed in the facility 10 for detecting a mover such as a person H1. The mover detecting units 6 according to this embodiment is a seating sensor provided for each chair provided in the space Sp1. The mover detecting units 6 transmit detection information, indicating whether any person H1 is seated on the chair, to the controller 2.

The determiner 231 according to the second embodiment determines the location of the first area A10 based on the entering/leaving information provided by the entering/leaving management system 5 and the thermal image. Determining the location of the first area A10 by reference to the entering/leaving information about persons H1 (movers) allows the number of the persons H1 present in the space Sp1 to be counted, thus enabling the location of the first area A10 to be determined more accurately.

In addition, the determiner 231 according to the second embodiment determines the location of the first area A10 based on the detection information provided by the mover detecting units 6 and the thermal image. Determining the location of the first area A10 by reference to the detection information about a mover indicating whether the person H1 is seated on a chair or not allows the location of the first area A10 to be determined more accurately.

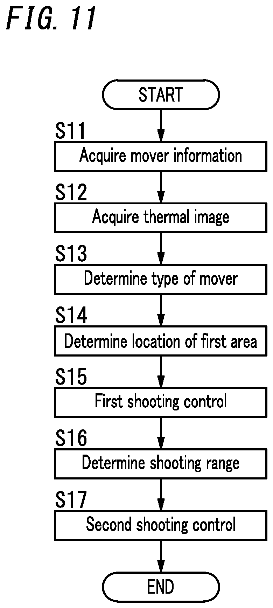

Next, it will be described with reference to FIG. 11 how the control system 1 according to the second embodiment operates.

The controller 2 acquires mover information (in S1). The mover information includes at least one of entering/leaving management information or detection information. The controller 2 according to the second embodiment acquires the entering/leaving management information as a piece of the mover information from the entering/leaving management system 5 and also acquires the detection information as another piece of mover information from the mover detecting units 6. After having acquired the mover information, the controller 2 determines the location of the first area A10 based on the thermal image, the mover information, and the priority information, (in S14).

Note that the processing steps S12 and S13 and the processing steps S15-S17 are the same as the processing steps S1 and S2 and the processing steps S4-S6, respectively, which have already been described for the first embodiment, and therefore, description thereof will be omitted herein.

Note that the flowchart shown in FIG. 11 shows only an exemplary procedure and should not be construed as limiting. Optionally, the processing steps shown in FIG. 11 may be performed in a different order from the illustrated one, some of the processing steps shown in FIG. 11 may be omitted as appropriate, and/or an additional processing step may be performed as needed.

In the second embodiment described above, the control system 1 includes the entering/leaving management system 5. However, the control system 1 does not have to include the entering/leaving management system 5. That is to say, the control system 1 and the entering/leaving management system 5 may be two separate systems.

### (Recapitulation)

As can be seen from the foregoing description, a control system (1) according to a first aspect includes a determiner (231) and a shooting controller (232). The determiner (231) determines, based on a thermal image generated by an infrared camera (3) installed in a facility (10), a location of a first area (A10) where a plurality of movers are densely concentrated. The shooting controller (232) controls an operation of the infrared camera (3). The shooting controller (232) controls the infrared camera (3) to make the infrared camera (3) shoot the first area (A10) preferentially over a second area (A20). The second area (A20) is other than the first area (A10).

According to this aspect, making the infrared camera (3) preferentially shoot the first area (A10) where a plurality of movers, such as persons (H1) as the targets to be detected by the infrared camera (3), are densely concentrated contributes to detecting the movers such as persons (H1) more accurately.

In a control system (1) according to a second aspect, which may be implemented in conjunction with the first aspect, the infrared camera (3) includes a plurality of the infrared cameras (3). The determiner (231) predicts a destination of one mover belonging to the plurality of movers based on a time-dependent variation of the thermal image. The determiner (231) determines the location of the first area (A10) based on the thermal image and the destination of the one mover that has been predicted. The shooting controller (232) controls at least one infrared camera (3), belonging to the plurality of the infrared cameras (3), to make the at least one infrared camera (3) shoot the first area (A10) preferentially over the second area (A20) that is other than the first area (A10).

According to this aspect, predicting the destination of the mover allows the location of the first area (A10) to be determined accurately.

In a control system (1) according to a third aspect, which may be implemented in conjunction with the first or second aspect, the infrared cameras (3) includes a plurality of the infrared cameras (3). The plurality of the infrared cameras (3) includes a first infrared camera (3a) and a second infrared camera (3b). A shooting range (4) of the first infrared camera (3a) forms part of a shooting range (4) of the second infrared camera (3b). The determiner (231) determines the location of the first area (A10) based on a thermal image generated by the second infrared camera (3b). The shooting controller (232) controls the first infrared camera (3a) to make the first infrared camera (3a) shoot the first area (A10) preferentially.

According to this aspect, the location of the first area (A10) is determined based on a thermal image generated by the second infrared camera (3b) having a relatively broad shooting range (4), thus allowing the location of the first area (A10) to be determined more accurately.

In a control system (1) according to a fourth aspect, which may be implemented in conjunction with any one of the first to third aspects, the determiner (231) determines the location of the first area (A10) based on entering/leaving information and the thermal image. The entering/leaving information includes a history of the plurality of movers entering and leaving the facility (10).

According to this aspect, the location of the first area (A10) is determined by reference to the entering/leaving information of the plurality of movers, thus allowing for counting the number of the movers present in the space (Sp1) and thereby determining the location of the first area (A10) more accurately.

In a control system (1) according to a fifth aspect, which may be implemented in conjunction with any one of the first to fourth aspects, a mover detecting unit (6) for detecting presence of any of the plurality of movers is installed in the facility (10). The determiner (231) determines the location of the first area (A10) based on information provided by the mover detecting unit (6) about the mover detected and the thermal image.

According to this aspect, the location of the first area (A10) is determined by reference to the information about the mover detected, thus allowing for determining the location of the first area (A10) more accurately.

In a control system (1) according to a sixth aspect, which may be implemented in conjunction with any one of the first to fifth aspects, the infrared camera (3) includes a plurality of the infrared cameras (3). The plurality of the infrared cameras (3) are installed in a single space (Sp1) in the facility (10). The determiner (231) determines locations of a plurality of shooting ranges (4) of the plurality of the infrared cameras (3) based on respective lens (37) types, positions, and shooting angles of the plurality of infrared cameras (3). The determiner (231) determines a location of at least one of an overlapping region (A5) where at least two of the plurality of shooting ranges (4) overlap with each other or a blank region (A6) belonging to none of the plurality of shooting ranges (4). The shooting controller (232) controls at least one infrared camera (3) belonging to the plurality of infrared cameras (3) by changing at least one of the lens (37) type, the position, or the shooting angle to cut down at least one of the overlapping region (A5) or the blank region (A6).

According to this aspect, the infrared camera(s) (3) is/are controlled to cut down at least one of the overlapping region (A5) or the blank region (A6), thus allowing the space (Sp1) to be shot more comprehensively (or exhaustively).

In a control system (1) according to a seventh aspect, which may be implemented in conjunction with any one of the first to sixth aspects, the determiner (231) determines a type of any one of the plurality of movers based on the thermal image. The determiner (231) determines, based on priority information, indicating correspondence between the type of the one mover and a priority level in shooting, and the thermal image, a location of the first area (A10) where at least two of the plurality of movers of a type having a highest priority level are densely concentrated.

This aspect allows the location of the first area (A10) where movers to be shot (or detected) preferentially are densely concentrated to be determined.

A control system (1) according to an eighth aspect, which may be implemented in conjunction with any one of the first to seventh aspects, further includes the infrared camera (3).

This aspect eliminates the need to provide the infrared camera (3) separately.

In a control system (1) according to a ninth aspect, which may be implemented in conjunction with any one of the first to eighth aspects, the infrared camera (3) includes multiple types of lenses (37) and a switch unit (34). The multiple types of lenses (37) include a narrow-angle lens (37a) and a wide-angle lens (37b). The switch unit (34) switches the multiple types of lenses (37). The switch unit (34) switches the multiple types of lenses (37) under control of the shooting controller (232).

This aspect allows the first area (A10) to be shot more accurately by switching the types of the multiple lenses (37) of the infrared camera (3).

In a control system (1) according to a tenth aspect, which may be implemented in conjunction with any one of the first to ninth aspects, the infrared camera (3) includes an angle change unit (35). The angle change unit (35) changes a shooting angle under control of the shooting controller (232).

This aspect allows the first area (A10) to be shot more accurately by changing the shooting angle of the infrared camera (3).

In a control system (1) according to an eleventh aspect, which may be implemented in conjunction with any one of the first to tenth aspects, the infrared camera (3) is mounted on a rail (111) installed on a ceiling surface (11) of the facility (10). The infrared camera (3) includes a moving mechanism (36) configured to allow the infrared camera (3) to move along the rail (111). The moving mechanism (36) moves along the rail (111) under control of the shooting controller (232).

This aspect allows the first area (A10) to be shot more accurately by moving the infrared camera (3).

Note that the constituent elements according to the second to eleventh aspects are not essential constituent elements for the control system (1) but may be omitted as appropriate.

A control method according to a twelfth aspect is designed to be performed by a computer system. The control method includes a determination step and a control step. The determination step includes determining, based on a thermal image generated by an infrared camera (3) installed in a facility (10), a location of a first area (A10) where a plurality of movers are densely concentrated. The control step includes controlling an operation of the infrared camera (3). The control step includes controlling the infrared camera (3) to make the infrared camera (3) shoot the first area (A10) preferentially over a second area (A20). The second area (A20) is other than the first area (A10).

According to this aspect, making the infrared camera (3) preferentially shoot the first area (A10) where a plurality of movers, such as persons (H1) as the targets to be detected by the infrared camera (3), are densely concentrated contributes to detecting the movers such as persons (H1) more accurately.

A program according to a thirteenth aspect is designed to cause the computer system to perform the control method according to the twelfth aspect.

According to this aspect, making the infrared camera (3) preferentially shoot the first area (A10) where a plurality of movers, such as persons (H1) as the targets to be detected by the infrared camera (3), are densely concentrated contributes to detecting the movers such as persons (H1) more accurately.

### Reference Signs List

- 1: Control System
- 10: Facility
- 11: Ceiling Surface
- 111: Rail
- 231: Determiner
- 232: Shooting Controller
- 3: Infrared Camera
- 3a: First Infrared Camera
- 3b: Second Infrared Camera
- 34: Switch Unit
- 35: Angle Change Unit
- 36: Moving Mechanism
- 37: Lens
- 37a: Narrow-Angle Lens
- 37b: Wide-Angle Lens
- 4: Shooting Range
- 6: Mover Detecting Unit
- A10: First Area
- A20: Second Area
- A5: Overlapping Region
- A6: Blank Region
- Sp1: Space

## Claims

1. A control system comprising:
a determiner configured to determine, based on a thermal image generated by an infrared camera installed in a facility, a location of a first area where a plurality of movers are densely concentrated; and
a shooting controller configured to control an operation of the infrared camera,
the shooting controller being configured to control the infrared camera to make the infrared camera shoot the first area preferentially over a second area, the second area being other than the first area.

2. The control system of claim 1, wherein
the infrared camera includes a plurality of the infrared cameras,
the determiner is configured to:
predict a destination of one mover belonging to the plurality of movers based on a time-dependent variation of the thermal image, and
determine the location of the first area based on the thermal image and the destination of the one mover that has been predicted, and
the shooting controller is configured to control at least one infrared camera, belonging to the plurality of the infrared cameras, to make the at least one infrared camera shoot the first area preferentially over the second area other than the first area.

3. The control system of claim 1, wherein
the infrared cameras includes a plurality of the infrared cameras,
the plurality of the infrared cameras includes a first infrared camera and a second infrared camera,
a shooting range of the first infrared camera forms part of a shooting range of the second infrared camera,
the determiner is configured to determine the location of the first area based on a thermal image generated by the second infrared camera, and
the shooting controller is configured to control the first infrared camera to make the first infrared camera shoot the first area preferentially.

4. The control system of claim 1, wherein
the determiner is configured to determine the location of the first area based on entering/leaving information and the thermal image, the entering/leaving information including a history of the plurality of movers entering and leaving the facility.

5. The control system of claim 1, wherein
a mover detecting unit configured to detect presence of any of the plurality of movers is installed in the facility, and
the determiner is configured to determine the location of the first area based on information provided by the mover detecting unit about the mover detected and the thermal image.

6. The control system of claim 1, wherein
the infrared camera includes a plurality of the infrared cameras,
the plurality of the infrared cameras are installed in a single space in the facility,
the determiner is configured to:
determine locations of a plurality of shooting ranges of the plurality of the infrared cameras based on respective lens types, positions, and shooting angles of the plurality of the infrared cameras; and
determine a location of at least one of an overlapping region where at least two of the plurality of shooting ranges overlap with each other or a blank region belonging to none of the plurality of shooting ranges, and
the shooting controller is configured to control at least one infrared camera belonging to the plurality of infrared cameras by changing at least one of the lens type, the position, or the shooting angle to cut down at least one of the overlapping region or the blank region.

7. The control system of claim 1, wherein
the determiner is configured to:
determine a type of any one of the plurality of movers based on the thermal image; and
determine, based on priority information, indicating correspondence between the type of the one mover and a priority level in shooting, and the thermal image, a location of the first area where at least two of the plurality of movers of a type having a highest priority level are densely concentrated.

8. The control system of claim 1, further comprising the infrared camera.

9. The control system of claim 8, wherein
the infrared camera includes:
multiple types of lenses including a narrow-angle lens and a wide-angle lens; and
a switch unit configured to switch the multiple types of lenses,
the switch unit being configured to switch the multiple types of lenses under control of the shooting controller.

10. The control system of claim 8, wherein
the infrared camera includes an angle change unit configured to change a shooting angle,
the angle change unit being configured to change the shooting angle under control of the shooting controller.

11. The control system of claim 8, wherein
the infrared camera is mounted on a rail installed on a ceiling surface of the facility, and
the infrared camera includes a moving mechanism configured to allow the infrared camera to move along the rail,
the moving mechanism being configured to move along the rail under control of the shooting controller.

12. A control method to be performed by a computer system, the control method comprising:
a determination step including determining, based on a thermal image generated by an infrared camera installed in a facility, a location of a first area where a plurality of movers are densely concentrated; and
a control step including controlling an operation of the infrared camera,
the control step including controlling the infrared camera to make the infrared camera shoot the first area preferentially over a second area, the second area being other than the first area.

13. A program designed to cause the computer system to perform the control method of claim 12.
